# EUROPEAN PATENT SPECIFICATION

(11) **EP 3 648 279 B1**
(45) Date of publication and mention of the grant of the patent: **01.12.2021**
(21) Application number: 18203473.6
(22) Date of filing: 30.10.2018
(51) Int. Cl.: H02J 3/06, G06Q 10/00

(54) **METHOD, ELECTRICAL GRID AND COMPUTER PROGRAM PRODUCT FOR PREDICTING OVERLOADS IN AN ELECTRICAL GRID**
VERFAHREN, STROMNETZ UND COMPUTERPROGRAMMPRODUKT ZUR VORHERSAGE VON ÜBERLASTUNGEN IN EINEM STROMNETZ
PROCÉDÉ, RÉSEAU ÉLECTRIQUE, ET PRODUIT DE PROGRAMME INFORMATIQUE PERMETTANT DE PRÉDIRE DES SURCHARGES DANS UN RÉSEAU ÉLECTRIQUE

(43) Date of publication of application: 06.05.2020
(73) Proprietor: Schleswig-Holstein Netz AG, 25451 Quickborn (DE)
(72) Inventor: Pilgram, Bernd, 80939 München (DE); Petersen, Timm, 24103 Kiel (DE); Tornow, Marco, 24783 Osterrönfeld (DE); Liebner, Timo, 25799 Wrohm (DE); Weigenand, Arne, 23568 Lübeck (DE)
(74) Representative: Glawe, Delfs, Moll

(56) References cited:
- US-A1- 2009 113 049
- US-A1- 2015 094 968
- US-A1- 2018 212 431
- US-B2- 8 756 047
- VARELA JESUS ET AL: "The Best of IGREENGrid Practices: A Distribution Network's Contribution to Resiliency", IEEE POWER AND ENERGY MAGAZINE, IEEE., PISCATAWAY, NJ, US, vol. 13, no. 3, 1 May 2015 (2015-05-01), pages 81-89, XP011579371, ISSN: 1540-7977, DOI: 10.1109/MPE.2015.2397338 [retrieved on 2015-04-21]

## Description

The invention concerns a method for predicting of overloads in an electrical grid as well as a corresponding electrical grid and computer program product.

Electrical grids are provided for energy transmission between energy sources like power plants and energy consumers such as industry, business and households. They generally comprise a plurality of nodes, often comprising transformers and/or switching elements, to distribute the energy fed-in by the energy sources to the energy consumers demanding energy. During distribution of energy, the capabilities of the grid and its individual nodes must be observed in order to avoid overloads of the grid and/or its nodes that might cause damage or destruction.

With the advent and propagation of renewable energy sources, like photovoltaic power plants and wind turbine generators, the general requirements for energy distribution in electrical grid has shifted. Previously, the energy was provided by a modest number of conventional power plants with precisely controllable power output that facilitated the distribution of energy without overloading the grid. With renewable energy sources, energy is now generally fed in across the whole grid and at far more nodes than previously used just for conventional energy sources, resulting in different load flows in the grid. Keeping the loads in the grid within acceptable levels at the individual nodes thus became a more challenging task, especially since the energy production by the renewable energy sources is typically dependent on external, non-controllable factors, e.g. the weather, while at the same time, usually there is the desire or even a provision to feed in all renewable energy momentarily available at any point in time, if possible.

However, in many cases the electrical grid originally planned for a given number of conventional power plants is not capable of accommodating all renewable energy available to be fed in at various nodes all over the grid in certain situation, e.g. with high winds and/or bright sunshine. Thus, it is currently necessary to manage the feed-in of renewable energy sources by restricting the allowed amount of energy to be feed-in by the individual sources.

It is currently common practice to simply shut-down affected electrical grid nodes to prevent damage to components of the electrical grid. In order to optimize the feed-in management, it is also investigated to work with prediction models which allow a forecast of the energy production by the various energy sources as well as the energy consumption in the short-term, e.g. 15 minutes. This would allow for an improved reaction to potential overloads in the grid, where instead of momentarily restricting one or more energy sources close to the overloaded part of the grid or node, a more methodical approach of restricting the power output of the energy sources can be taken, e.g. observing additional factors like a preference of a feed-in of renewable energy. Alternatively or in addition, consumers and/or energy storage systems controllable by the grid operator might be available, which might be used to reduce loads on one or more nodes in the grid.

In order to provide a reasonable feed-in management based on energy production and consumption forecasts, precise predictions are vital. Currently, these forecasts are usually done by using statistical regression techniques based on historic data and energy prediction, which themselves are largely dependent on weather forecasts.

However, with the feed-in of weather-dependent regenerative power ever increasing and the availability of controllable energy consumers and/or storage system, the quality of said prediction is often unsatisfactory, which may be explained by the increased complexity of the overall system.

Document US 2015/0094968 A1 concerns the use of grid nodes of a grid, which are equipped with sensor and communication technology.

In document US 2009/113049 A1 the management of a system by means of a neural network is described, whereby status, reliability and performance of the system are considered.

Document US 2018/212431 A1 pertains to a system is known for the collection of real-time and prediction information concerning a grid and grid nodes.

From document US 8 756 047 B2 a power flow analysis of an electrical energy system is known, using an artificial neural network.

It is thus an object of the present invention, to provide an improved method, system and computer program product for the prediction of overloads in an electrical grid.

This object is solved by a method according to the main claim, as well as an electrical grid and a computer program product according to claims 10 and 11, respectively. Preferred embodiments are the subject matter of the dependent claims.

Thus, the present invention concerns a method for predicting of overloads in an electrical grid with a plurality of nodes, wherein renewable energy sources, whose feed-in power is dependent on external factors, are connected to various monitored nodes, wherein a set of artificial neural networks is configured to predict overloads in each monitored node of the electrical grid based on
- data representing historic energy overloads for at least a part of the monitored nodes;
- data representing actual energy production forecasts;
- data representing calendar information; and
- a mathematical model of each monitored node.

The invention also concerns an electrical grid with a plurality of nodes, wherein renewable energy sources, whose feed-in power is dependent on external factors, are connected to various monitored nodes, comprising a control system having a set of artificial neural networks configured to jointly predict overloads in each monitored node of the electrical grid in accordance with the inventive method

The invention further concerns a computer program product comprising program parts which, when loaded into a computer, are designed to carry out the inventive method.

Before going into detail, the terminology used in connection with the present invention is elucidated.

Generally, "monitored nodes" are points in the electrical grid, where lines intersect or terminate and which are monitored in regard their electrical load. At the intersections or at the termination points, electrical devices like transformers or switches might be provided, which might be controlled by a superordinate instance. Said electrical devices as well as the lines of the electrical grid connecting nodes usually have a known maximum allowed electrical load; exceeding this limit means an overload of at the node. The information gathered at monitored nodes may generally made available to superordinate instances for further processing.

The term "energy source" is to be understood in a broad sense. Apart from conventional energy sources, like fossil-fuel power plants, as well as regenerative energy sources, like photovoltaic power plants and wind turbine generators, coupling stations allowing the transfer of electrical power between two adjacent electrical grids - often between a transmission grid and local distribution grid - may also qualify as energy sources. Same is true for storage facilities. The fact, that coupling stations and storage facilities may also be regarded as consumers when energy is drawn from the electric grid, does not disqualify them to be energy sources. Energy sources are connected to the grid at a node. In case the node is monitored, the information provided by the node usually comprises direct information or at least allows conclusions on the actual energy provided by the energy source connected thereto.

The feed-in power of energy sources is "dependent on external factors" in case the maximum power available for feeding into the electrical grid is dependent on conditions which are generally not controllable and only to a certain degree foreseeable in the long term. For example, apart from the predicable shut-down during nighttime, the power output of a photovoltaic power plant is largely dependent on the shadowing by clouds. Similarly, the power output of wind turbine generators is directly linked to the wind actually available.

The invention is based on the insight that commonly used statistical regression techniques for the prediction of overloads in electrical grids usually require physical simulation models, whose complexity becomes huge in case of a larger electrical grids with a considerable number of nodes, energy sources and energy consumers. The required complexity, however, often leads to imprecisions that result in inaccurate predictions. Trying to adapt the physical model in case of inaccurate predictions is also a very laborious task.

Despite the electrical grid being a well monitored system and generally suitable for being modelled, the present invention deviates from the approach predominant in the prior art of trying to mathematically reproduce the electrical grid in a single instance and derive predictions for overloads therefrom. Instead the present invention relies on the information from the monitored nodes and a set of artificial neural networks - i.e. more than one artificial neural network - to accomplish the task of providing predictions of overloads in an electrical network.

With the present invention, each of the artificial neural networks in the set is generally provided with the same input data and provides prediction for overloads in at least some of the nodes of the electrical grid, so that the resulting predictions of all artificial neural networks preferably cover all nodes in the electrical grid. These input data include
- data representing historic energy overloads for at least a part of the monitored nodes,
- data representing actual energy production forecasts,
- data representing calendar information and
- a mathematical model of each monitored node.

The data representing historic energy overloads comprises a list of events in the past, where at least one of the nodes of the electrical grid was overloaded comprising details of which node was overloaded. Furthermore, the load on at least part of the remaining nodes and/or the actual energy production of the energy sources might be included in the data representing historic energy overloads. This data can be compiled from the load information collected from the monitored nodes or any information directly received from the energy sources.

The data representing actual energy production forecasts comprises information on the assumed energy production, especially of regenerative renewable energy sources. These energy production forecasts may be derived according to the state of the art .

The data representing calendar information comprises information on the current day and specifics of said day. For example, the data might comprise information of the current day to be a weekday, a Saturday or Sunday, a bank holiday or a bridge day. Said data is useful to obtain predictions on the energy consumption within the electrical grid or at least its short-term development, i.e. the changes of the current status to be expected.

Last but not least, the set of artificial neural networks requires mathematical models of each monitored node. Often, it is sufficient, if one artificial neural network has access to the mathematical models of those nodes, for which it shall provide the predictions.

The set of artificial neural networks is configured to predict overloads in each monitored node of the electrical grid based on this input data by deriving prediction from past overloads based on the current and the presumed short-term status of the grid against the background of the type of day. These prediction can then further be used to take or at least prepare countermeasures, e.g. by restricting the feed-in of energy by one or more energy sources, or - in the long run - identify deficits in the electrical grid due to reoccurring overloads in certain nodes, which might lead to local enhancements.

While it is possible that the set of artificial neural networks comprises artificial neural networks in a number smaller than the number of nodes for which overloads are predicted, it is preferred that each said node is represented by one artificial neural networks.

In addition to the above-mentioned input data, the set of artificial neural networks might refer to at least one of the following:
- data representing historic energy flows for at least the part of the nodes;
- data representing historic energy flow forecasts for at least the part of the nodes;
- data representing weather information; and/or
- data representing weather forecasts.

The general weather information and/or forecasts, which might also be or at least comprise specific wind or cloud coverage forecasts for e.g. the location of individual regenerative renewable energy sources, might be used to better predict future energy production.

The data representing historic energy flows comprises data of the energy flows in at least the part of the nodes at times in the past. In contrast to the data representing historic energy overloads, data representing historic energy flows is not limited to these times, where an overload occurred, but also covers the times in between.

The data representing historic energy flow predictions for at least the part of the nodes comprises predictions of the energy flows from the past, at that time having been made for future.

The energy flow predictions are preferably provided by the set of artificial neural networks that is configured to predict the energy flow in each node of the electrical grid, which predictions for each node are then stored in an energy flow prediction database. For predicting potential overloads in a grid, the set of artificial neural networks usually determines the expected load on each of the nodes to determine the risk of an overload. Said load on a node is usually identical or at least proportional to the energy flow thereto.

It is preferred that the set of artificial neural networks and/or the mathematical model of each node is evaluated by comparison of the stored overproduction predictions with the actually occurring overproductions and/or of the stored load flow prediction and the actually occurring energy flows. By this comparison, the quality of the predictions by the set of artificial neural networks can be determined.

Furthermore, it is preferred that in case of a deviation from one of the prediction, preferably by a predefined threshold, the set of artificial neural network and/or the mathematical model of one or more nodes is adapted in view of possible deviation between the predicted and the actual energy production in order to improve the quality of the predictions. This way, the inventive method might somewhat be regarded self-learning.

As already mentioned, the set of artificial neural networks comprises at least two artificial neural networks which are each capable of making predictions for a single node, a group of nodes or all nodes. It is highly preferable, if the individual artificial neural networks can be run as a separate task. In this case, it is possible to run the artificial neural networks on different processors or computers and thus allows for distributed computing.

It is preferred that the set of artificial neural networks comprises long short-term memory layers. These types of networks are advantageous in terms of training the artificial neural networks for the purpose of the invention.

As indicated above, it can be preferred that the predictions are further processed to recommendations for feed-in management actions to avoid potential overloads of network nodes. These recommendation can then be implemented by a grid control system, e.g. by posing restriction on certain energy sources.

For explanations of the inventive electrical grid and computer program product, it is referred to the above.

The invention will now be described in further detail in regard to the enclosed figures:
- Figure 1:: a schematic drawing of an electrical grid; and
- Figure 2:: a schematic flow-diagram of an exemplary implementation of the invention.

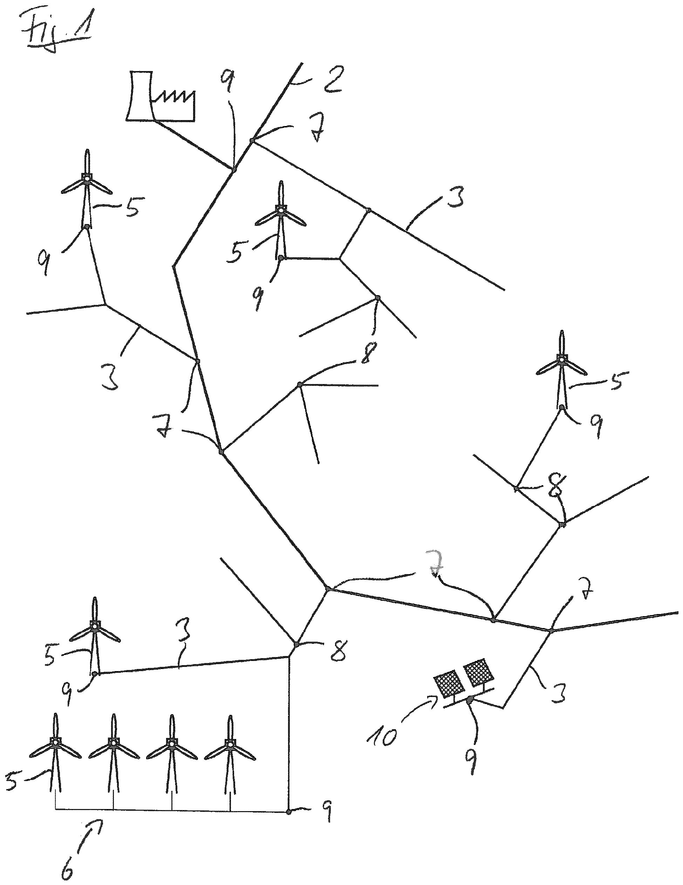

Figure 1 shows a schematic drawing of an electrical grid 1.

The grid comprises a transmission grid 2 with various distribution grids 3 connected thereto. A conventional fossil fuel power plant 4 is connected to the transmission grid 2 for energy infeed, while a photovoltaic power plant 10, individual wind turbines 5 and several wind turbines 5 grouped to a wind farm 6 are connected to the distribution grids 3, to which they feed their produced energy. Wind turbines 5 and wind parks 6 are renewable energy sources, whose feed-in power is dependent on wind as a non-controllable external factor.

Even though not shown in Figure 1, various consumers for electrical energy are connected to the distribution grids 3. These include industrial consumers, businesses and private households.

In the example of figure 1, the interconnection points 7 between the transmission grid 2 and the distribution grids 3, important junctions 8 in the distribution grids 3 as well as the feed-in points 9 of the power plant 4, the PV power plant 10, the wind turbines 5 and the wind parks 6 are all monitored nodes of the electrical grid 1, where the respective energy flow is continuously measured. For each of the monitored nodes 7, 8, 9, there is defined a maximum allowed load, which may for example stem from the maximum allowed load of the equipment installed at the node, e.g. transformers and/or switches, or the electrical lines terminating at the node. Exceeding the maximum allowed load at a node 7, 8, 9 is considered an overload.

In order to minimize the risk of an overload at one or more nodes 7, 8, 9, the inventive method is applied on the electrical grid 1 to predict the flow loads of the monitored nodes 7, 8, 9 and thus the risk overloads in order to preemptively take countermeasures by e.g. restricting the feed-in of energy by one or more PV power plant 10, wind turbines 5 and/or a wind parks 6 or to reduce the feed in of the conventional power plant 4.

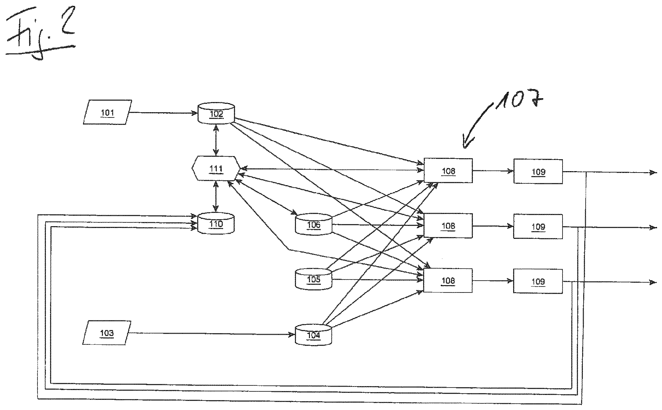

In Figure 2, the schematics of an exemplary implementation of the inventive method 100 for predicting of overloads in an electrical grid 1 is shown.

The flow load measurements of the individual nodes 7, 8, 9 are received via data input 101 and stored in a database 102 for data representing historic energy flow of the nodes 7, 8, 9. Together with the actual measurements, an indication whether one or more nodes have experienced an overload is received and stored in the database 102. Thus, said database 102 may also be regarded to provide data representing historic overloads for the monitored nodes 7, 8, 9.

Furthermore, via data input 103 data representing the actual energy production forecasts of at least the wind turbines 5 and the wind park 6 are received. These energy production forecasts are established according to the state of the art, especially taking into account the weather forecast. Said actual energy production forecasts are stored in the database 104.

In another database 105, data representing calendar information is stored. This data provides information about the type of day at the current date, e.g. workday, Saturday, Sunday, bank holiday or bridge day. This information is useful for taking into account expectable changes in the energy consumption within the grid 1, e.g. a drop of energy consumption in a distribution grid 2 largely serving a business district at the end of typical office hours or a generally reduced energy consumption on Sundays due to most businesses and shops being closed all day.

Last but not least, mathematical models of each monitored node 7, 8, 9 are stored in database 106. The mathematical models also include information about the maximum allowed load flow.

The data representing historic energy flow comprising data representing historic overloads for the monitored nodes 7, 8, 9, the latest data representing the actual energy production forecasts, the data representing calendar information as well as the mathematical models from databases 102, 104, 105 and 106 are provided to a set 107 of artificial neural networks 108, each with at least one long short-term memory layer. Each of the artificial neural networks 108 is trained to predict the load flow of part of the monitored nodes 7, 8, 9 and to determine - based on the maximum allowed load flow for the nodes received from database 106 - the risk of an overload for the period defined by the energy production forecasts. The individual artificial neural networks 108, which may run as separate tasks on one or more computers, are configured that in total the load flow and the risk of overload for each of the monitored nodes 7, 8, 9 is predicted by at least one neuronal networks 108.

The predictions by the artificial neural networks 108 are postprocessed in block 109 e.g. by combining previous predictions of the individual neural networks 108 to a single prediction for each of the nodes 7, 8, 9. For post processing averaging or any other kind of algorithmic method may be used.

Said predictions and especially the risk assessment for overloads may then be provided to the master control unit (not shown) for the electrical grid 1 to either take or at least prepare the appropriate measures to avoid any overload at any node 7, 8, 9.

The predictions are also stored in database 110 and compared to the actual energy flow eventually stored in database 102 for the same point in time by comparator 111. In case there is a deviation between the predictions and the actual measured data, the mathematical models for the individual nodes 7, 8, 9 in database 106 and/or the artificial neural networks 108 may be adjusted in order to improve the quality of the predictions.

## Claims

1. Method for predicting of overloads in an electrical grid (1) with a plurality of nodes (7, 8, 9), wherein renewable energy sources (5, 6, 10), whose feed-in power is dependent on external factors, are connected to various monitored nodes (7, 8, 9), **characterized in that** a set (107) of artificial neural networks (108) is configured to jointly predict overloads in each monitored node (7, 8, 9) of the electrical grid (1) based on
- data representing historic overloads for at least a part of the monitored nodes (7, 8, 9);
- data representing actual energy production forecasts;
- data representing calendar information; and
- a mathematical model of each monitored node (7, 8, 9).

2. Method according to claim 1, wherein the set (107) of artificial neural networks (108) additionally refers to at least one of the following:
- data representing historic energy flow for at least the part of the monitored nodes (7, 8, 9);
- data representing historic energy flow predictions for at least the part of the monitored nodes (7, 8, 9);
- data representing weather information; and/or
- data representing weather forecasts.

3. Method according to one of the preceding claims, wherein the set (107) of artificial neural networks (108) is configured to predict the energy flow in each monitored node (7, 8, 9) of the electrical grid (1), which predictions for each monitored node (7, 8, 9) are then stored in an energy flow prediction database (110).

4. Method according to one of the preceding claims, wherein the set (107) of artificial neural network (108) and/or the mathematical model of each node is evaluated by comparison of stored overproduction predictions with the actually occurring overproductions and/or of the stored load flow predictions and the actually occurring energy flows.

5. Method according to claim 4, wherein
in case of a deviation from one of the prediction, preferably by a predefined threshold, the set (107) of artificial neural networks (108) and/or the mathematical model of one or more monitored nodes (7, 8, 9) is adapted in view of the deviation between the predicted and the actual energy production.

6. Method according to one of the preceding claims, wherein the set (107) of artificial neural networks (108) is configured to operate each artificial neural network (108) in a separate task.

7. Method according to one of the preceding claims, wherein the set (107) of artificial neural networks (108) comprises long short-term memory layers.

8. Method according to one of the preceding claims, wherein the predictions are further processed to recommendations for feed-in management actions to avoid potential overloads of monitored nodes (7, 8, 9).

9. Method according to one of the preceding claims, wherein the set (107) of artificial neural network (108) comprises one artificial neural network (108) for each node (7, 8, 9) for which overloads are predicted.

10. Electrical grid (1) with a plurality of nodes (7, 8, 9), wherein renewable energy sources (5, 6, 10), whose feed-in power is dependent on external factors, are connected to various monitored nodes (7, 8, 9), **characterized in** further comprising a control system having a set (107) of artificial neural networks (108) configured to jointly predict overloads in each monitored node (7, 8, 9) of the electrical grid (1) in accordance with the method according to one of the preceding claims.

11. Computer program product comprising program parts which, when loaded into a computer, are designed to carry out the method according to one of the claims 1 to 9.

## Patentansprüche

1. Verfahren zum Vorhersagen von Überlastereignissen in einem Stromnetz (1) mit mehreren Knoten (7, 8, 9), wobei Quellen (5, 6, 10) für erneuerbare Energie, deren Einspeisungsleistung von äußeren Faktoren abhängig ist, mit diversen überwachten Knoten (7, 8, 9) verbunden sind,
**dadurch gekennzeichnet, dass**
eine Gruppe (107) künstlicher neuraler Netze (108) konfiguriert ist, zusammen Überlastereignisse in jedem überwachten Knoten (7, 8, 9) des Stromnetzes (1) vorherzusagen, auf der Grundlage
- von Daten, die historische Überlastereignisse zumindest für einen Anteil der überwachten Knoten (7, 8, 9) darstellen;
- von Daten, die Vorhersagen der tatsächlichen Energieerzeugung darstellen;
- von Daten, die Kalenderinformationen darstellen; und
- eines mathematischen Modells jedes überwachten Knotens (7, 8, 9).

2. Verfahren nach Anspruch 1, wobei
sich die Gruppe (107) künstlicher neuraler Netze (108) zusätzlich auf mindestens eines der Folgenden bezieht:
- Daten, die einen historischen Energiefluss zumindest für den Anteil der überwachten Knoten (7, 8, 9) darstellen;
- Daten, die historische Vorhersagen des Energieflusses zumindest für den Anteil der überwachten Knoten (7, 8, 9) darstellen;
- Daten, die Wetterinformationen darstellen; und/oder
- Daten, die Wettervorhersagen darstellen.

3. Verfahren nach einem der vorhergehenden Ansprüche,
wobei die Gruppe (107) künstlicher neuraler Netze (108) konfiguriert ist, den Energiefluss in jedem überwachten Knoten (7, 8, 9) des Stromnetzes (1) vorherzusagen, wobei die Vorhersagen für jeden überwachten Knoten (7, 8, 9) daraufhin in einer Energieflussvorhersage-Datenbank (110) gespeichert werden.

4. Verfahren nach einem der vorhergehenden Ansprüche,
wobei die Gruppe (107) künstlicher neuraler Netze (108) und/oder das mathematische Modell jedes Knotens durch Vergleich gespeicherter Überproduktionsvorhersagen mit den tatsächlich auftretenden Überproduktionen und/oder der gespeicherten Lastflussvorhersagen und der tatsächlich auftretenden Energieflüsse ausgewertet werden.

5. Verfahren nach Anspruch 4, wobei
im Fall einer Abweichung von einer der Vorhersagen, vorzugsweise um einen vorgegebenen Schwellenwert, die Gruppe (107) künstlicher neuraler Netze (108) und/oder das mathematische Modell eines oder mehrerer überwachter Knoten (7, 8, 9) im Hinblick auf die Abweichung zwischen der vorhergesagten und der tatsächlichen Energieerzeugung ausgelegt sind.

6. Verfahren nach einem der vorhergehenden Ansprüche,
wobei die Gruppe (107) künstlicher neuraler Netze (108) konfiguriert ist, jedes künstliche neurale Netz (108) in einer getrennten Task zu betreiben.

7. Verfahren nach einem der vorhergehenden Ansprüche,
wobei die Gruppe (107) künstlicher neuraler Netze (108) Schichten eines langen Kurzzeitgedächtnisses umfasst.

8. Verfahren nach einem der vorhergehenden Ansprüche,
wobei die Vorhersagen zu Empfehlungen für Einspeisungsmanagementmaßnahmen, um mögliche Überlastereignisse von überwachten Knoten (7, 8, 9) zu vermeiden, weiterverarbeitet werden.

9. Verfahren nach einem der vorhergehenden Ansprüche,
wobei die Gruppe (107) künstlicher neuraler Netze (108) ein künstliches neurales Netz (108) für jeden Knoten (7, 8, 9), für den Überlastereignisse vorhergesagt werden, umfasst.

10. Stromnetz (1) mit mehreren Knoten (7, 8, 9), wobei Quellen (5, 6, 10) für erneuerbare Energie, deren Einspeisungsleistung von äußeren Faktoren abhängig ist, mit diversen überwachten Knoten (7, 8, 9) verbunden sind,
**dadurch gekennzeichnet, dass** es ferner ein Steuersystem umfasst, das eine Gruppe (107) künstlicher neuraler Netze (108) aufweist, die konfiguriert sind, in Übereistimmung mit dem Verfahren nach einem der vorhergehenden Ansprüche zusammen Überlastereignisse in jedem überwachten Knoten (7, 8, 9) des Stromnetzes (1) vorherzusagen.

11. Computerprogrammprodukt, das Programmkomponenten umfasst, die dann, wenn sie in einen Computer geladen werden, ausgelegt sind, das Verfahren nach einem der Ansprüche 1 bis 9 auszuführen.

## Revendications

1. Procédé pour prédire des surcharges dans un réseau électrique (1) comprenant une pluralité de nœuds (7, 8, 9), où des sources d'énergie renouvelable (5, 6, 10), dont la puissance d'alimentation dépend de facteurs externes, sont connectées à divers nœuds surveillés (7, 8, 9), le réseau étant **caractérisé en ce qu'**un ensemble (107) de réseaux neuronaux artificiels (108) sont configurés pour prédire conjointement les surcharges dans chaque nœud surveillé (7, 8, 9) du réseau électrique (1) sur la base :
- de données représentant des surcharges historiques pour au moins une partie des nœuds surveillés (7, 8, 9) ;
- de données représentant des prévisions de production d'énergie réelle ;
- de données représentant des informations de calendrier ; et
- d'un modèle mathématique de chaque nœud surveillé (7, 8, 9) .

2. Procédé selon la revendication 1, dans lequel :
l'ensemble (107) de réseaux neuronaux artificiels (108) se réfère en outre à au moins, l'un des éléments suivants :
- des données représentant des flux d'énergie historiques pour au moins la partie des nœuds surveillés (7, 8, 9) ;
- des données représentant des prévisions de flux d'énergie historiques pour au moins la partie des nœuds surveillés (7, 8, 9) ;
- des données représentant des informations météorologiques ; et/ou
- des données représentant des prévisions météorologiques.

3. Procédé selon l'une des revendications précédentes, dans lequel l'ensemble (107) de réseaux neuronaux artificiels (108) est configuré pour prédire le flux d'énergie dans chaque nœud surveillé (7, 8, 9) du réseau électrique (1), lesquelles prédictions pour chaque nœud surveillé (7, 8, 9) sont ensuite stockées dans une base de données de prédictions de flux d'énergie (110).

4. Procédé selon l'une des revendications précédentes, dans lequel l'ensemble (107) de réseaux neuronaux artificiels (108) et/ou le modèle mathématique de chaque nœud sont évalués par comparaison des prédictions de surproduction stockées avec les surproductions effectivement réalisées et/ou des prédictions de flux de charge stockées et des flux énergétiques effectivement réalisés.

5. Procédé selon la revendication 4, dans lequel :
en cas d'écart par rapport à une des prédictions, de préférence d'un seuil prédéfini, l'ensemble (107) de réseaux neuronaux artificiels (108) et/ou le modèle mathématique d'un ou plusieurs nœuds surveillés (7, 8, 9) sont adaptés à la lumière de l'écart entre la production d'énergie prédite et la production d'énergie réelle.

6. Procédé selon l'une des revendications précédentes, dans lequel l'ensemble (107) de réseaux neuronaux artificiels (108) est configuré pour faire fonctionner chaque réseau neuronal artificiel (108) à la réalisation d'une tâche séparée.

7. Procédé selon l'une des revendications précédentes, dans lequel l'ensemble (107) de réseaux neuronaux artificiels (108) comprend des couches de mémoire à long court terme.

8. Procédé selon l'une des revendications précédentes, dans lequel les prédictions sont en outre traitées en recommandations d'actions de gestion de l'alimentation pour éviter les surcharges potentielles des nœuds surveillés (7, 8, 9).

9. Procédé selon l'une des revendications précédentes, dans lequel l'ensemble (107) de réseaux neuronaux artificiels (108) comprend un réseau neuronal artificiel (108) pour chaque nœud (7, 8, 9) pour lequel des surcharges sont prédites.

10. Réseau électrique (1) comprenant une pluralité de nœuds (7, 8, 9), où des sources d'énergie renouvelable (5, 6, 10), dont la puissance d'alimentation dépend de facteurs externes, sont connectées à divers nœuds surveillés (7, 8, 9), le réseau étant **caractérisé en ce qu'**il comprend en outre un système de commande ayant un ensemble (107) de réseaux neuronaux artificiels (108) configurés pour prédire conjointement les surcharges dans chaque nœud surveillé (7, 8, 9) du réseau électrique (1) conformément au procédé selon l'une des revendications précédentes.

11. Produit programme informatique comprenant des parties de programme qui, lorsqu'elles sont chargées dans un ordinateur, sont conçues pour mettre en œuvre le procédé selon l'une des revendications 1 à 9.
